# EUROPÄISCHE PATENTSCHRIFT

(11) **EP 2 868 362 B1**
(45) Veröffentlichungstag und Bekanntmachung des Hinweises auf die Patenterteilung: **03.01.2018**
(21) Anmeldenummer: 14191830.0
(22) Anmeldetag: 05.11.2014
(51) Int. Cl.: B01D 46/00, B01D 46/10, B01D 46/52

(54) **Filteranordnung**
filter assembly
Agencement de filtre

(30) Priorität: 05.11.2013 DE 102013018460
(43) Veröffentlichungstag der Anmeldung: 06.05.2015
(73) Patentinhaber: MANN + HUMMEL GMBH, 71636 Ludwigsburg (DE)
(72) Erfinder: Diersch, Stefan, 95367 Trebgast (DE)

(56) Entgegenhaltungen:
- DE-A1-102010 050 222
- DE-U1-202005 019 611
- JP-A- H1 147 531
- JP-A- H06 226 024

## Beschreibung

### Technisches Gebiet

Die vorliegende Erfindung betrifft ein Filterelement, insbesondere einen Innenraumfilter zum Filtern von Luft für den Innenraum eines Fahrzeugs oder Gebäudes. Weiterhin betrifft die Erfindung eine Filteranordnung mit einem solchen Filterelement und einer Filteraufnahme.

Obwohl auf beliebige Filterelemente und -anordnungen anwendbar, werden die vorliegende Erfindung sowie die ihr zugrunde liegende Problematik nachfolgend für einen Innenraumfilter eines Kraftfahrzeugs beschrieben.

Die zunehmende Luftverunreinigung, insbesondere in Großstädten, in Verbindung mit dem Einsatz moderner Klimaanlagen macht es erforderlich, die von außen in den Innenraum eines Kraftfahrzeugs geleitete und aufbereitete bzw. klimatisierte Luft mittels geeigneter Filter zu reinigen. Hierfür kommen beispielsweise Partikelfilter, Geruchsfilter oder deren Kombination miteinander in Betracht, die in der Umgebungsluft enthaltene Schwebstoffe, Partikel und Gerüche möglichst gut herausfiltern bzw. adsorbieren sollen.

Zur Filterung von Luft für den Innenraum eines Kraftfahrzeugs werden häufig gefaltete bzw. plissierte Filtermaterialien, wie etwa Filtervliese, die einen Faltenpack bilden, eingesetzt. Hierzu wird ein zunächst flächiger Filtermaterialbogen zickzackförmig gefaltet. Das Faltenpack wird von Seitenbändern und Kopfbändern oder einem sonstigen Rahmen gehalten. Derartige Filterelemente können in einer Filteraufnahme austauschbar fixiert sein. Die somit gebildete Filteranordnung kann in einer Klimaanlage eines entsprechenden Kraftfahrzeugs installiert sein.

### Stand der Technik

Die DE 10 2007 057 384 A1 beschreibt ein Filterelement mit einem zickzackförmig gefalteten Filtermedium und einem Seitenband, dessen zickzackförmiger Rand im Wesentlichen in der Form eines Faltenprofils des gefalteten Filtermediums gebildet wird.

Die JP H11-47531 beschreibt einen Innenraumfilter mit einem gefalteten Filtermedium und einem auf Faltenprofilen des Filtermediums angeordneten trapezförmigen Seitenband. Die Endfalten des gefalteten Filtermediums sind schräg zu einer Ebene (E) positioniert, auf der Faltenkanten des gefalteten Filtermediums angeordnet sind, wobei das Seitenband mit der gleichen Schräge abgeschrägt ist wie die Endfalte und wobei das Seitenband ein Vliesseitenband sein kann. Dieses Filterelement wird in einen Kunststoffrahmen eingesetzt und mit dem Kunststoffrahmen in eine Filteraufnahme

### Offenbarung der Erfindung

Vor diesem Hintergrund liegt der vorliegenden Erfindung die Aufgabe zugrunde, ein verbessertes, z.B. kostengünstigeres Filterelement zu schaffen, das in eine Filteraufnahme verdrehsicher eingebracht werden kann.

Diese Aufgabe wird gelöst durch ein Filterelement zum Einbringen in eine Filteraufnahme mit einem gefalteten Filtermedium und einem auf Faltenprofilen des Filtermediums angeordneten trapezförmigen Seitenband, wobei zumindest eine Endfalte des gefalteten Filtermediums schräg zu einer Ebene positioniert ist, auf der Faltenkanten des gefalteten Filtermediums angeordnet sind, wobei das Seitenband mit der gleichen Schräge abgeschrägt ist wie die Endfalte, und wobei das Seitenband bevorzugt ein Vliesseitenband ist. Die Filteraufnahme hat weist eine Aufnahmekontur auf, die korrespondierend zu dem Seitenband, das mit der gleichen Schräge abgeschrägt ist wie die Endfalte, ausgebildet ist. Das Filterelement wird in Richtung der Faltenkanten in die Filteraufnahme eingeschoben.

Das Filterelement ist insbesondere ein Innenraumfilter. Das Seitenband ist vorzugsweise bogenförmig. Das Seitenband kann flexibel sein und ist insbesondere in zumindest einer Raumrichtung biegbar. Alternativ kann das Seitenband starr sein. Dadurch, dass das Seitenband mit der gleichen Schräge abgeschrägt ist wie die Endfalte, kann das Filterelement nur in einer definierten Position in eine Filteraufnahme eingebaut werden. Eine fehlerhafte Montage des Filterelements wird dadurch ausgeschlossen. Dadurch, dass das Seitenband ein Vliesseitenband ist, kann im Vergleich zu angespritzten, angeschmolzenen oder angeklebten Kunststoffspritzgussseitenbändern ein geringeres Gewicht des Filterelements erreicht werden. Ferner weist ein Filterelement mit einem Vliesseitenband eine kompaktere Bauform auf als ein Filterelement mit Kunststoffspritzgussseitenbändern, wodurch die zur Verfügung stehende Filterfläche des Filterelements vergrößert wird.

In Ausführungsformen des Filterelements schließt das Seitenband bündig mit der Endfalte ab. Insbesondere ist eine Außenkontur des Seitenbands auf der Endfalte angeordnet.

In Ausführungsformen des Filterelements sind das Seitenband und das Filtermedium aus demselben Material gefertigt. Hierdurch kann das Filterelement besonders kostengünstig hergestellt werden.

In Ausführungsformen des Filterelements ist die schräg verlaufende Endfalte in einem vorbestimmten Winkel relativ zu der Ebene angeordnet. Vorzugsweise weist das Filtermedium zwei Endfalten auf, die beide in dem gleichen vorbestimmten Winkel oder in unterschiedlichen vorbestimmten Winkeln schräg zu der Ebene angeordnet sein können. Bevorzugte Bereiche des Winkels sind 45° bis 85° weiter bevorzugt 60° bis 80°.

In Ausführungsformen des Filterelements ist die schräg verlaufende Endfalte mit einem Kopfband verstärkt. Vorzugsweise ist an beiden Endfalten jeweils ein Kopfband vorgesehen. Die Kopfbänder geben dem Filterelement zusätzliche Stabilität. Die Seitenbänder und die Kopfbänder können das Filtermedium rahmenförmig einfassen.

Weiterhin wird eine Filteranordnung mit einem derartigen Filterelement und einer Filteraufnahme zum Aufnehmen des Filterelements vorgeschlagen. Die Filteraufnahme kann einen Filteraufnahmekörper und einen Filteraufnahmedeckel aufweisen, mit dem der Filteraufnahmekörper verschließbar ist.

In Ausführungsformen der Filteranordnung weist die Filteraufnahme eine Aufnahmekontur auf, die korrespondierend zu dem Seitenband, das mit der gleichen Schräge abgeschrägt ist wie die Endfalte, ausgebildet ist. Die Aufnahmekontur kann eine an oder in der Filteraufnahme vorgesehene Schräge sein.

In Ausführungsformen der Filteranordnung erlaubt das mit der gleichen Schräge wie die Endfalte abgeschrägte Seitenband eine Aufnahme des Filterelements in der Filteraufnahme in nur einer vorbestimmten Position. Hierdurch ist eine Fehlmontage des Filterelements ausgeschlossen.

Das Filtermedium kann gefaltet oder wellenförmig ausgebildet sein. Als Faltungen sind beispielsweise Zickzack- oder W-Faltungen bekannt. Das Filtermedium kann geprägt und anschließend an Prägekanten scharfkantig gefaltet sein. Als Ausgangsmaterial kann ein flächiger Materialfilterbogen dienen, welcher entsprechend umgeformt wird. Das Filtermedium ist beispielsweise ein Filtergewebe, ein Filtergelege oder ein Filtervlies. Insbesondere kann das Filtermedium in einem Schmelz-Blas-Verfahren oder Spinnvliesverfahren hergestellt sein. Das Filtermedium kann Naturfasern, wie Baumwolle, oder Kunstfasern, beispielsweise aus Polyester, Polyphenylsulfid oder Polytetrafluorethylen, aufweisen. Die Fasern können bei der Verarbeitung in, schräg und/oder quer zur Maschinenrichtung orientiert sein.

Ein entsprechendes Filterelement dient der Filterung von Luft, Fluid, also gasförmigen und/oder flüssigen Medien, beispielsweise Luft. Gasförmiges Fluid bzw. Luft umfasst hier auch Gas- bzw. Luft-Feststoffgemische oder Gas- bzw. Luft-Flüssigkeitsgemische. Beispielsweise kann eine Klimaanlage das Filterelement aufweisen. Das Filterelement kann eine Dichteinrichtung aufweisen, welche eine dem Filterelement zugeordnete Rohseite gegenüber einer Reinseite desselben abdichtet. Die Dichteinrichtung kann bauteilidentisch mit ein oder mehreren Verstärkungselementen des Filterelements ausgeführt sein. Alternativ kann die Dichteinrichtung als Zusatzbauteil ausgebildet sein. So kann die Dichteinrichtung beispielsweise an dem Filtermedium, den ein oder mehreren Verstärkungselementen, dem Filterelement oder der Filteraufnahme angebracht sein.

Die für das Filterelement beschriebenen Merkmale gelten für die Filteranordnung entsprechend, und umgekehrt.

Weitere mögliche Implementierungen der Erfindung umfassen auch nicht explizit genannte Kombinationen von zuvor oder im Folgenden bezüglich der Ausführungsbeispiele beschriebenen Merkmale oder Verfahrensschritte. Dabei wird der Fachmann auch Einzelaspekte als Verbesserungen oder Ergänzungen zu der jeweiligen Grundform der Erfindung hinzufügen.

Weitere Ausgestaltungen der Erfindung sind Gegenstand der Unteransprüche sowie der im Folgenden beschriebenen Ausführungsbeispiele der Erfindung. Im Weiteren wird die Erfindung anhand von Ausführungsbeispielen unter Bezugnahme auf die beigelegten Figuren näher erläutert.

### Kurze Beschreibung der Zeichnungen

Es zeigt dabei:
- Fig. 1:: eine schematische perspektivische Ansicht eines Ausführungsbeispiels einer Filteranordnung; und
- Fig. 2:: eine schematische Seitenansicht eines Ausführungsbeispiels eines Innenraumfilters für die Filteranordnung gemäß der Fig. 1.

In den Figuren sind gleiche oder funktionsgleiche Elemente, sofern nichts anderes angegeben ist, mit denselben Bezugszeichen versehen worden.

### Ausführungsform(en) der Erfindung

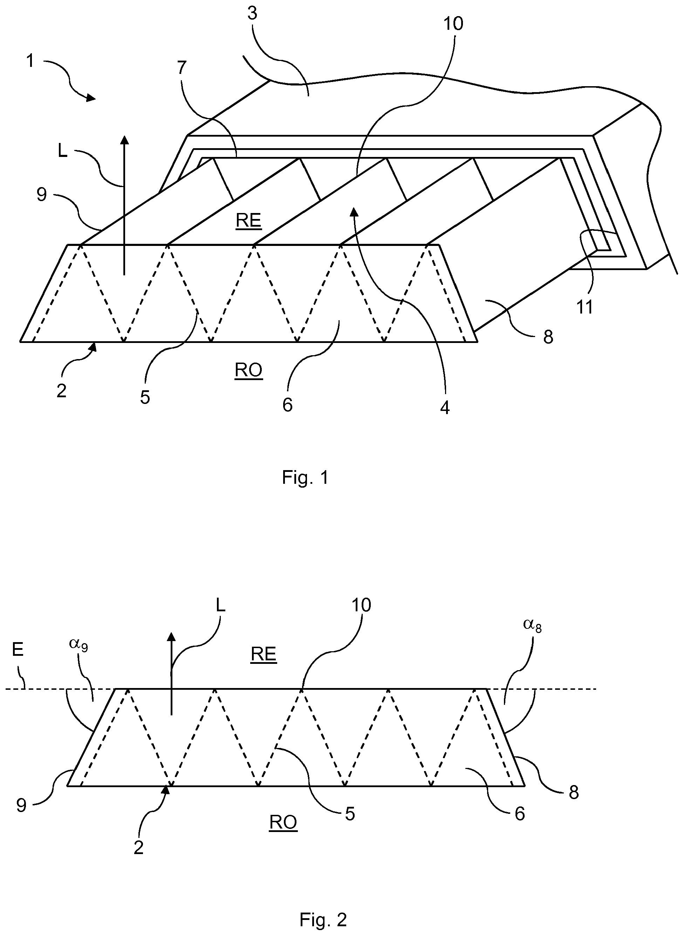

Die Fig. 1 zeigt eine schematische perspektivische Darstellung eines Ausführungsbeispiels einer Filteranordnung 1, insbesondere einer Innenraumfilteranordnung. Die Fig. 2 zeigt eine schematische Seitenansicht eines Innenraumfilters 2 der Filteranordnung 1.

Die Filteranordnung 1 weist den Innenraumfilter 2 und eine Filteraufnahme 3 auf, in der der Innenraumfilter 2 derart aufnehmbar ist, dass er im Filterbetrieb von einer Rohseite RO bzw. Anströmseite senkrecht zu seiner flächigen Erstreckung mit Luft L hin zu einer Reinseite RE bzw. Abströmseite durchströmt wird. Die Filteraufnahme 3 ist vorzugsweise kastenförmig und weist einen Filteraufnahmekörper und einen Filteraufnahmedeckel auf, der dazu eingerichtet ist, den Filteraufnahmekörper zu verschließen. Der Innenraumfilter 2 kann mit einer Dichteinrichtung fluiddicht gegenüber der Filteraufnahme 3 abgedichtet sein. Unter fluiddicht ist vorliegend auch zu verstehen, dass ein vernachlässigbarer Fluidstrom an dem Innenraumfilter 2, insbesondere seitlich an dem Innenraumfilter 2, vorbei strömt.

Der Innenraumfilter 2 umfasst ein Filtermedium 4 in Form eines Faltenpacks aus plissiertem Filtermaterial. Häufig werden bogenförmige Kunststoffvliesmaterialien zickzackförmig gefaltet als Filtermaterialien für Kraftfahrzeuginnenraumfilter verwendet. Im Betrieb des Innenraumfilters 2 durchströmt das zu filternde Fluid die durch das plissierte Filtermaterial vergrößerte Filteroberfläche des Filtermediums 4. In der Regel werden die Filtermaterialien und die Geometrie des Filtermediums 4 oder des Innenraumfilters 2 an eine vorgegebene Durchströmrichtung angepasst.

Auf Faltenprofilen 5 des Filtermediums 4, welche gestrichelt dargestellt sind, sind in der Orientierung der Fig. 1 an jeweils einer Längsseite des Filtermediums 4 vorderseitig ein Seitenband 6 und rückseitig ein Seitenband 7 angebracht. Es kann dabei eine Verklebung mit beispielsweise einem Schmelzklebstoff oder anderen geeigneten Klebstoffen erfolgen. Die Seitenbänder 6, 7 sind beispielsweise aus dem gleichen Werkstoff gefertigt wie das Filtermedium 4. Die Seitenbänder 6, 7 können aus einem Vlieswerkstoff gefertigt sein. Durch die Seitenbänder 6, 7 erfährt das Filtermedium 4 eine gewisse seitliche Stabilität. Die Seitenbänder 6, 7 sind insbesondere flexibel. Alternativ können die Seitenbänder 6, 7 starr sein.

Um ferner eine Versteifung und einen Abschluss an Stirnseiten des Filtermediums 4 zu erzielen, können zur Verstärkung von Endfalten 8, 9 des Filtermediums 4 Kopfbänder an den jeweiligen Endfalten 8, 9 angebracht sein. Die Kopfbänder weisen ein rechteckförmiges Profil auf. Die beiden Seitenbänder 6, 7 mit den Kopfbändern umschließen das Filtermedium 4 vorzugsweise in der Art eines Rahmens.

In der Orientierung der Fig. 1 und 2 sind oberseitig Faltenkanten 10, von denen nur eine mit einem Bezugszeichen versehen ist, des Filtermediums 4 gezeigt. Die Faltenkanten 10 sind in einer gemeinsamen Ebene E angeordnet. Zumindest eine der Endfalten 8, 9 ist schräg zu der Ebene E angeordnet. Beispielsweise kann die Endfalte 8 mit der Ebene E einen vorbestimmten Winkel α₈ einschließen. Der Winkel α₈ kann beispielsweise 45° betragen.

Zusätzlich oder alternativ kann die Endfalte 9 schräg zu der Ebene E angeordnet sein. Insbesondere kann die Endfalte 9 mit der Ebene E einen Winkel α₉ einschließen Der Winkel α₉ kann unterschiedlich oder gleich dem Winkel α₈ sein.

Insbesondere sind die Seitenbänder 6, 7 mit der gleichen Schräge abgeschrägt wie die Endfalten 8, 9. Hierdurch ergibt sich eine trapezförmige Geometrie der Seitenbänder 6, 7. Unter einem Trapez ist vorliegend ein ebenes Viereck mit zwei parallel zueinander liegenden Seiten zu verstehen. Vorzugsweise schließen die Seitenbänder 6, 7 bündig mit der jeweiligen Endfalte 8, 9 ab.

Die Filteraufnahme 3 weist vorzugsweise eine Aufnahmekontur 11 auf, die korrespondierend zu den Seitenbändern 6, 7, die mit der gleichen Schräge abgeschrägt sind wie die jeweilige Endfalte 8, 9, ausgebildet ist. Dadurch erlaubt das mit der gleichen Schräge wie die Endfalte 8, 9 abgeschrägte Seitenband 6, 7 eine Aufnahme des Innenraumfilters 2 in der Filteraufnahme 3 in nur einer vorbestimmten Position. Hierdurch wird ein sogenannter Poka Yoke Effekt erzielt. Eine Fehlmontage des Innenraumfilters 2 in der Filteraufnahme 3 wird verhindert.

Obwohl die Erfindung anhand konkreter Ausführungsbeispielen vorstehend beschrieben wurde, ist sie auf diese nicht beschränkt, sondern vielfältig modifizierbar.

## Patentansprüche

1. Filteranordnung (1) mit einem Innenraumfilter (2) und einer Filteraufnahme (3) zum Aufnehmen des Innenraumfilters (2), wobei der Innenraumfilter (2) ein gefaltetes Filtermedium (4) und ein auf Faltenprofilen (5) des Filtermediums (4) angeordnetes trapezförmigen Seitenband (6, 7) umfasst, wobei zumindest eine Endfalte (8, 9) des gefalteten Filtermediums (4) schräg zu einer Ebene (E) positioniert ist, auf der Faltenkanten (10) des gefalteten Filtermediums (4) angeordnet sind, wobei das Seitenband (6, 7) mit der gleichen Schräge abgeschrägt ist wie die Endfalte (8, 9), wobei die Filteraufnahme (3) eine Aufnahmekontur (11) aufweist, die korrespondierend zu dem Seitenband (6, 7), das mit der gleichen Schräge abgeschrägt ist wie die Endfalte (8, 9), ausgebildet ist und wobei der Innenraumfilter (2) in Richtung der Faltenkanten in die Filteraufnahme einschiebbar ist.

2. Filteranordnung nach Anspruch 1 wobei das Seitenband (6, 7) ein Vliesseitenband ist.

3. Filteranordnung nach Anspruch 1 oder 2, wobei das Seitenband (6, 7) bündig mit der Endfalte (8, 9) abschließt.

4. Filteranordnung nach einem der Ansprüche 1 bis 3, wobei das Seitenband (6, 7) und das Filtermedium (4) aus demselben Material gefertigt sind.

5. Filteranordnung nach einem der Ansprüche 1 bis 4, wobei die schräg verlaufende Endfalte (8, 9) in einem vorbestimmten Winkel (α₈, α₉) relativ zu der Ebene (E) angeordnet ist.

6. Filteranordnung nach einem der Ansprüche 1 bis 5, wobei die schräg verlaufende Endfalte (8, 9) mit einem Kopfband verstärkt ist.

7. Filteranordnung nach nach einem der Ansprüche 1 bis 6, wobei das mit der gleichen Schräge wie die Endfalte (8, 9) abgeschrägte Seitenband (6, 7) eine Aufnahme des Innenraumfilters (2) in der Filteraufnahme (3) in nur einer vorbestimmten Position erlaubt.

8. Filteranordnung nach einem der Ansprüche 1 bis 7, wobei es sich bei der Filteranordnung um eine Klimaanlage handelt und die Filteraufnahme als Schacht für den Innenraumfilter ausgebildet ist.

## Claims

1. Filter arrangement (1) with a cabin filter (2) and a filter seat (3) for receiving the cabin filter (2), wherein the cabin filter (2) comprises a folded filter medium (4) and a trapezoidal sideband (6, 7) disposed on folding profiles (5) of the filter medium (4), wherein at least one end fold (8, 9) of the folded filter medium (4) is positioned in an inclined manner in relation to a plane (E) on which fold edges (10) of the folded filter medium (4) are disposed, wherein the sideband (6, 7) has the same inclination as the end fold (8, 9), wherein the filter seat (3) features a receiving contour (11) which is designed correspondingly in relation to the sideband (6, 7) that has the same inclination as the end fold (8, 9) and wherein the cabin filter (2) can be inserted into the filter seat in the direction of the fold edges.

2. Filter arrangement according to claim 1, wherein the sideband (6, 7) is a nonwoven sideband.

3. Filter arrangement according to claim 1 or 2, wherein the sideband (6, 7) ends flush with the end fold (8, 9).

4. Filter arrangement according to one of the claims 1 to 3, wherein the sideband (6, 7) and the filter medium (4) are made of the same material.

5. Filter arrangement according to one of the claims 1 to 4, wherein the inclined end fold (8, 9) is disposed in a predefined angle (α₈, α₉) relative to the plane (E).

6. Filter arrangement according to one of the claims 1 to 5, wherein the inclined end fold (8, 9) is reinforced by means of a headband.

7. Filter arrangement according to one of the claims 1 to 6, wherein the sideband (6, 7), having the same inclination as the end fold (8, 9), allows receiving the cabin filter (2) in the filter seat (3) in only one predefined position.

8. Filter arrangement according to one of the claims 1 to 7, wherein the filter arrangement is an air-conditioning system and the filter seat is designed as slot for the cabin filter.

## Revendications

1. Agencement de filtre (1) avec un filtre d'habitacle (2) et un logement de filtre (3) pour recevoir le filtre d'habitacle (2), dans lequel le filtre d'habitacle (2) comprend un milieu filtrant (4) plié et une bande latérale (6, 7) trapézoïdale disposée sur des profils de pli (5) du milieu filtrant (4), dans lequel au moins un pli d'extrémité (8, 9) du milieu filtrant (4) plié est positionné de manière inclinée par rapport à un plan (E) sur lequel les arêtes de pliage (10) du milieu filtrant (4) plié sont disposées, dans lequel la bande latérale (6, 7) présente la même inclinaison que le pli d'extrémité (8, 9), dans lequel le logement de filtre (3) présente un contour de logement (11) qui est réalisé de façon correspondante par rapport à la bande latérale (6, 7) qui présente la même inclinaison que le pli d'extrémité (6, 7) et dans lequel le filtre d'habitacle (2) peut être inséré dans le logement de filtre en direction des arêtes de pliage.

2. Agencement de filtre selon la revendication 1, dans lequel la bande latérale (6, 7) est une bande latérale en non-tissé.

3. Agencement de filtre selon la revendication 1 ou 2, dans lequel la bande latérale (6, 7) est à fleur du pli d'extrémité (8, 9).

4. Agencement de filtre selon l'une des revendications 1 à 3, dans lequel la bande latérale (6, 7) et le milieu filtrant (4) sont faits du même matériau.

5. Agencement de filtre selon l'une des revendications 1 à 4, dans lequel le pli d'extrémité (8, 9) incliné est disposé dans un angle prédéterminé (α₈, α₉) par rapport au plan (E).

6. Agencement de filtre selon l'une des revendications 1 à 5, dans lequel le pli d'extrémité (8, 9) incliné est renforcé au moyen d'un bandeau.

7. Agencement de filtre selon l'une des revendications 1 à 6, dans lequel la bande latérale (6, 7) présentant la même inclinaison que le pli d'extrémité (8, 9) permet de recevoir le filtre d'habitacle (2) dans le logement de filtre (3) uniquement dans une position prédéterminée.

8. Agencement de filtre selon l'une des revendications 1 à 7, dans lequel l'agencement de filtre est un dispositif de climatisation et le logement de filtre est réalisé en forme de compartiment.
